# FASCICULE DE BREVET EUROPEEN

(11) **EP 3 222 073 B1**
(45) Date de publication et mention de la délivrance du brevet: **13.03.2019**
(21) Numéro de dépôt: 15798033.5
(22) Date de dépôt: 19.11.2015
(51) Int. Cl.: H04W 12/00, H04L 12/28, H04W 4/00, H04W 12/06

(54) **PROCEDE DE CONFIGURATION D'UNE INSTALLATION DOMOTIQUE**
VERFAHREN ZUM KONFIGURIEREN EINER DOMOTIKANLAGE
METHOD OF CONFIGURING A HOME AUTOMATION INSTALLATION

(30) Priorité: 21.11.2014 FR 1461279
(43) Date de publication de la demande: 27.09.2017
(73) Titulaire: Somfy Activites SA, 74300 Cluses (FR)
(72) Inventeur: MIGNOT, Pierre, F-05380 Châteauroux les Alpes (FR); MUGNIER, Mickaël, F-74130 Bonneville (FR)
(74) Mandataire: Novaimo
(86) Numéro de dépôt international: PCT/EP2015/077041
(87) Numéro de publication internationale: WO 2016/079215

(56) Documents cités:
- EP-A2- 1 837 840
- US-A1- 2007 077 930

## Description

L'invention se rapporte au domaine des installations domotiques comportant des équipements utilisés pour assurer le confort et la sécurité du bâtiment, par exemple des actionneurs pour la manoeuvre des fermetures, des protections solaires, des systèmes de ventilation et de climatisation, de chauffage ou d'éclairage, ainsi que des capteurs et des points de commande associés à ces actionneurs. Plus précisément, l'invention concerne la configuration de telles installations domotiques.

Dans une installation domotique, les différents équipements sont aptes à communiquer entre eux selon un même protocole, et à constituer un réseau de communication local au sein de l'installation domotique, par des liaisons sans fil ou filaires, de façon unidirectionnelle ou bidirectionnelle.

La sécurité des échanges est assurée par différents mécanismes de sécurité, comme l'utilisation d'une clé de chiffrement, et/ou la mémorisation dans chaque équipement de l'installation domotique des identifiants des équipements avec lequel il est autorisé à coopérer ; la clé de chiffrement, et/ou les identifiants des équipements, ainsi que d'autres données sensibles tels que des paramètres de réglage, sont mémorisés par les différents membres de l'installation domotique lors de la configuration de l'installation.

Les opérations de configuration nécessitent un haut degré de sécurité et sont exécutées sous la supervision d'un utilisateur autorisé ; elles sont accessibles à l'utilisateur via des interfaces homme-machine de configuration.

Sur les équipements domotiques, notamment avec écran, l'interface homme-machine de configuration présente une ergonomie différente de celle pour une utilisation normale. Cette différence est voulue, pour prévenir le déclenchement par erreur du processus de configuration. L'ergonomie de configuration n'est pas souvent utilisée, donc pas familière à un utilisateur non spécialisé. Par conséquent, une difficulté pour l'utilisateur est d'accéder à l'interface homme-machine de configuration.

Dans l'état actuel de la technique, on connaît des méthodes pour accéder à l'interface homme-machine de configuration :
- parcourir les menus proposés par une interface homme-machine générale de l'équipement domotique ; cette solution a comme inconvénient principal d'être complexe et peu intuitive ;
- une autre solution est de suivre les instructions d'une notice technique associée à l'équipement domotique concerné ; cette solution présente l'inconvénient d'être peu fiable, car ce type de document peut être égaré ;
- ou encore de connaître par avance l'action spécifique à effectuer, par exemple un appui d'une certaine durée sur une touche ou une combinaison de touches ; cette solution est également peu fiable, car elle repose sur l'apprentissage et l'intervention des personnes qui peuvent oublier les opérations à exécuter ou être tout simplement absentes.

Une autre solution connue est de lancer la configuration de l'installation domotique à partir de la même interface homme-machine qu'en utilisation normale, ce qui peut provoquer le déclenchement par erreur de la configuration de l'installation domotique et poser des problèmes de sécurité.

L'invention propose une solution pour accéder de manière simple et fiable à l'interface homme-machine de configuration, tout en assurant la sécurité des opérations de configuration de l'installation.

Selon un premier aspect, l'invention concerne un procédé de configuration d'une installation domotique comprenant des équipements domotiques aptes à communiquer entre eux selon un même protocole et à constituer un réseau local. Ce procédé comprend :
- une étape de détection de proximité entre
   - un premier équipement domotique appartenant à l'installation domotique, et
   - un deuxième équipement domotique, susceptible d'être configuré ou intégré dans l'installation domotique ;
- une étape de détermination
   - d'un premier identifiant du premier équipement domotique et/ou
   - d'un deuxième identifiant du deuxième équipement domotique ;
- une étape d'obtention d'une interface homme-machine de configuration, en fonction du premier et/ou du deuxième identifiant, l'interface homme-machine de configuration comprenant au moins une invitation à exécuter une action de confirmation par un utilisateur et l'interface homme-machine de configuration étant obtenue de manière automatique suite à l'étape de détection de proximité entre les premier et deuxième équipements domotiques ;
- une étape de fourniture à l'utilisateur de l'interface homme-machine de configuration ;
- une étape d'analyse d'un résultat de l'exécution par l'utilisateur de l'action de confirmation ;
- une étape de déclenchement de la configuration de l'installation domotique, subordonnée au résultat ;
le procédé étant mis en oeuvre par le premier équipement domotique ou par le deuxième équipement domotique ou par un troisième équipement domotique dans l'installation domotique, l'interface homme-machine de configuration n'étant pas accessible à l'utilisateur avant l'étape de détection de proximité.

L'étape d'obtention comprend, avantageusement, une étape de chargement de données définissant l'interface homme-machine de configuration depuis une mémoire.

L'étape de fourniture à l'utilisateur de l'interface homme-machine de configuration comprend, de préférence, l'affichage d'une telle interface sur un écran.

De cette manière, si un doute subsiste quant à l'intention de l'utilisateur de configurer l'installation domotique, ou à l'identité des équipements concernés, il est levé par l'action de confirmation exécutée par l'utilisateur. Un déclenchement intempestif de l'installation ou d'un équipement donné au sein de l'installation est ainsi évité.

Si l'action de confirmation n'est pas exécutée, ou le résultat de l'exécution n'est pas conforme au résultat attendu, la configuration de l'installation n'est pas déclenchée, ce qui apporte un élément de sécurité à l'opération de configuration.

Dans un mode d'exécution, l'étape de détection de proximité comprend une sous-étape de détection d'un choc entre le premier équipement domotique et le deuxième équipement domotique.

Ce mode d'exécution est particulièrement avantageux pour l'intégration des équipements domotiques unidirectionnels, par exemple des points de commande capables uniquement d'émettre des messages, mais pas d'en recevoir. La détection d'un choc remplace avantageusement la réception des messages, car elle permet à l'équipement domotique unidirectionnel d'obtenir une information venant de l'extérieur.

L'étape de détection peut comprendre, en outre, une sous-étape de réception d'au moins un message de notification d'un choc détecté par le premier équipement domotique et/ou par le deuxième équipement domotique.

L'étape de détection peut comprendre une première sous-étape de réception d'un premier message en provenance d'un équipement initiateur parmi le premier équipement domotique et le deuxième équipement domotique, le premier message pouvant être reçu avec un niveau de réception supérieur à une première valeur prédéterminée.

Dans un autre mode d'exécution, l'étape de détection comprend une première sous-étape de réception via un lien de communication radio, d'un premier message en provenance d'un équipement initiateur parmi le premier équipement domotique et le deuxième équipement domotique, le premier message étant reçu avec un niveau de réception supérieur à une première valeur prédéterminée.

Le procédé peut comprendre en outre :
- une première sous-étape d'émission d'un deuxième message à destination de l'équipement initiateur, le deuxième message étant émis avec un premier niveau d'émission ;
- une deuxième sous-étape de réception d'un troisième message en provenance de l'équipement initiateur, le troisième message comprenant une information relative à un deuxième niveau de réception du deuxième message par l'équipement initiateur ;
- une sous-étape d'analyse de l'information relative au deuxième niveau de réception.

Ainsi, on peut estimer la distance en fonction des puissances. L'analyse peut être effectuée de manière différente pour les différents types d'équipements.

Dans ce mode d'exécution, l'étape de déclenchement de la configuration comprend une deuxième sous-étape d'émission d'un quatrième message à destination de l'équipement initiateur, le quatrième message étant émis avec un deuxième niveau d'émission inférieur au premier niveau d'émission.

Ainsi, seul l'équipement situé à proximité peut recevoir les données de configuration, sans perturber les autres équipements présents.

L'étape de déclenchement peut comprendre une étape de première réaction du premier et/ou du deuxième équipement domotique si les premier et deuxième équipements domotiques sont appairés et une étape de deuxième réaction du premier et/ou du deuxième équipement domotique si les premier et deuxième équipements domotiques ne sont pas appairés.

L'étape de déclenchement peut comprendre une étape de transfert de données de configuration du premier équipement domotique de type outil de configuration au deuxième équipement domotique, les données de configuration étant relatives à un troisième équipement domotique préalablement configuré et de type semblable ou similaire au deuxième équipement domotique.

Dans un mode particulier d'exécution, l'étape d'obtention comprend une sous-étape de réception d'au moins un message en provenance du premier ou du deuxième équipement domotique, ce message comprenant des informations pour définir l'interface homme-machine de configuration.

Ainsi, il est possible d'intégrer un nouveau type d'équipement, sans moyen d'affichage et de saisie, dans une installation existante, en utilisant les moyens d'affichage et de saisie d'un équipement déjà membre du réseau. De plus, l'équipement qui présente à l'utilisateur l'interface homme-machine de configuration n'a pas besoin de stocker à l'avance les informations relatives aux interfaces homme-machine de configuration de tous les équipements potentiellement candidats à une intégration dans le réseau. Les nouveaux modèles, qui contiennent dans leur mémoire les informations relatives à leur propre interface homme-machine de configuration, sont prêts pour l'intégration (de type PnP, « Plug and play »).

L'étape d'obtention peut comprendre une sous-étape de téléchargement, depuis un serveur, d'informations de définition de l'interface homme-machine de configuration. En variante, l'interface homme-machine de configuration peut être obtenue par téléchargement depuis un serveur distant. Cette variante est particulièrement avantageuse si l'équipement exécutant le procédé est muni des moyens d'accès à un réseau externe, de type Internet ; de cette manière la mise à jour des interfaces homme-machine est indépendante des informations stockées localement par les équipements domotiques et permet d'utiliser les dernières versions des interfaces homme-machine sans intervention sur les équipements déjà programmés.

Dans un mode d'exécution, l'étape de fourniture comprend
- une sous-étape d'envoi à un équipement domotique dit destinataire disposant des moyens d'affichage et de saisie, d'au moins un message comprenant des informations pour définir l'interface homme-machine de configuration ; et
- une sous-étape de réception, depuis l'équipement domotique dit destinataire d'un message comprenant le résultat de l'exécution par l'utilisateur, de l'action de confirmation.

Selon une caractéristique avantageuse de l'invention, avant l'étape de détection de proximité, l'utilisateur n'a accès qu'à une interface homme-machine de commande. En outre, les interfaces homme-machine de commande et de configuration sont accessibles de manière exclusive, c'est-à-dire que lorsque l'une des interfaces est accessible à l'utilisateur, l'autre ne l'est pas.

Avantageusement, le procédé peut être mis en oeuvre par un équipement domotique ne disposant pas d'éléments d'affichage et de saisie. L'équipement destinataire peut être un équipement parmi le premier et le deuxième équipement domotique, ou encore un troisième équipement domotique présent dans l'installation.

Les différentes étapes du procédé peuvent être déterminées par des instructions de programme d'ordinateur. En conséquence, l'invention vise aussi un support d'enregistrement lisible par un processeur sur lequel est enregistré un programme d'ordinateur comprenant les instructions pour l'exécution des étapes du procédé de configuration selon l'invention.

L'invention porte aussi sur un équipement domotique comprenant des éléments matériels et/ou logiciels de mise en oeuvre d'étapes ou des étapes du procédé de configuration défini précédemment.

Les éléments matériels et/ou logiciels peuvent comprendre :
- Un élément de détection de proximité entre un premier équipement domotique et un deuxième équipement domotique ;
- Un élément de détermination d'un premier identifiant d'un premier équipement domotique ;
- Un élément d'obtention d'une interface homme-machine de configuration ;
- Un élément de fourniture de l'interface homme-machine de configuration ;
- Un élément d'analyse d'un résultat d'une exécution par un utilisateur d'une action de confirmation ;
- Un élément de déclenchement de la configuration d'une installation domotique, la configuration étant subordonnée au résultat.

Les éléments matériels et/ou logiciels peuvent comprendre un écran d'affichage, notamment un écran tactile.

L'invention concerne aussi une installation domotique comprenant au moins un équipement tel que défini précédemment.

L'invention concerne également un programme d'ordinateur et un support d'enregistrement lisible par un processeur sur lequel est enregistré ce programme. Le support peut être n'importe quelle entité capable de stocker ou de transporter le programme. Ce support peut être un circuit intégré dans lequel le programme est incorporé.

L'équipement domotique mettant en oeuvre le procédé de configuration peut être un actionneur, un capteur, un dispositif d'affichage, un point de commande associé à cet actionneur, une unité centrale ou locale de gestion de l'installation domotique, ou un outil d'installation.

L'équipement domotique mettant en oeuvre le procédé de configuration peut être déjà intégré à l'installation et détenir des données de configuration, qu'il peut transmettre grâce à l'invention à un ou plusieurs équipements à configurer ou à intégrer dans l'installation domotique.

Il peut être également un équipement domotique destiné à être configuré ou intégré dans l'installation. Grâce à l'invention, cet équipement peut obtenir les données de configuration. Il est à noter que dans ce cas, le procédé est exécuté dans l'installation, c'est-à-dire au sein de l'installation, par un équipement domotique qui n'est pas encore un équipement de l'installation.

L'équipement domotique peut aussi être un équipement tiers de l'installation comprenant des éléments d'affichage et de saisie, étant ainsi apte
- à inviter l'utilisateur à effectuer une action spécifique pour autoriser l'échange de données entre deux autres équipements, et
- à détecter l'exécution de cette action.

Conformément à l'invention, l'interface homme-machine de configuration est obtenue de manière automatique, et donc fiable, suite à la détection de proximité entre les équipements domotiques destinés à échanger des données de configuration et à leur identification.

Ainsi, l'interface de configuration n'est pas accessible à l'utilisateur avant l'étape de détection de proximité. Par exemple, avant cette étape, l'utilisateur n'a accès qu'à une interface de commande. Par contre, cette interface de configuration devient accessible à l'utilisateur après cette étape de détection de proximité. De préférence, les interfaces de commande et de configuration sont accessibles de manière exclusive, c'est-à-dire que lorsque l'une des interfaces est accessible, l'autre ne l'est pas.

Une fois obtenue, l'interface homme-machine de configuration est présentée à l'utilisateur, l'invitant à effectuer une action spécifique pour autoriser l'échange des données entre les équipements. Cette action spécifique assure la sécurité des opérations de configuration.

D'autres caractéristiques de l'invention seront comprises à l'aide des figures qui illustrent des exemples de réalisation dépourvus de tout caractère limitatif.

La figure 1 représente des modes de réalisation d'une installation domotique selon l'invention, dans laquelle le procédé selon l'invention peut être mis en oeuvre.

Les figures 2 à 8 illustrent, sous forme d'organigramme, les étapes de différents modes d'exécution du procédé selon l'invention.

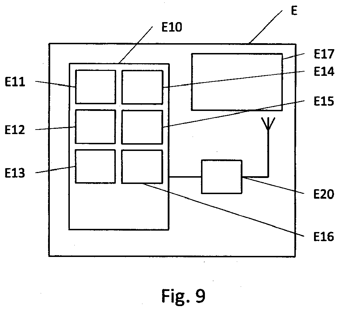

La figure 9 est un schéma d'un mode de réalisation d'un équipement domotique selon l'invention.

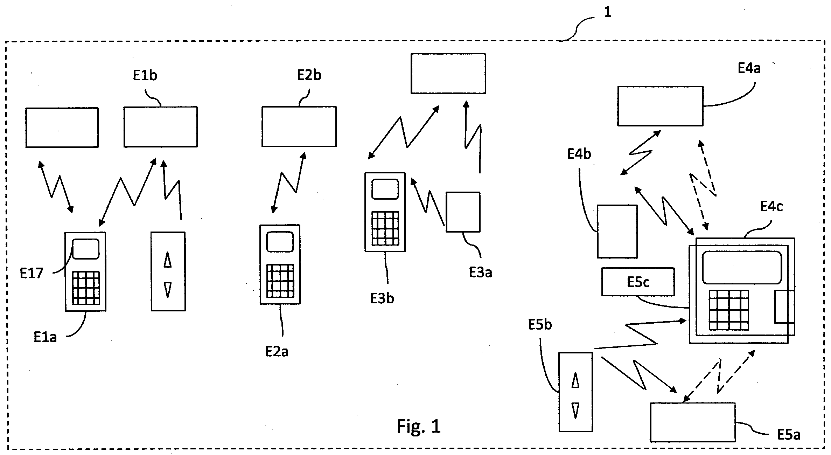

Des modes de réalisation d'une installation domotique selon l'invention sont décrits ci-après en référence à la figure 1. L'installation comprend différents équipements domotiques E1a, E1b, E1d, E1e, E2a, E2b, E3a, E3b, E4a, E4b, E4c, E5a, E5b, E5c. Ces différents équipements peuvent être de différentes natures, notamment des télécommandes, des actionneurs, des capteurs et des unités de commande, en particulier des unités centrales de commande. Chaque équipement comprend, de préférence, un émetteur d'ordres, notamment un émetteur d'ordres sous forme de signaux radioélectriques, et/ou un récepteur d'ordres, notamment un récepteur d'ordres sous forme de signaux radioélectriques. Chaque équipement domotique comprend aussi un générateur d'ordres et/ou un interpréteur d'ordres.

Les actionneurs permettent, par exemple, d'entraîner un élément mobile comme une porte, un volet roulant, un store, un écran ou une trappe.

La figure 1 décrit en particulier différents ensembles d'éléments domotiques, les éléments d'un même ensemble interagissant les uns avec les autres, dans une installation domotique, selon le procédé de configuration, en particulier selon les modes d'exécution décrits plus bas.

Au moins certains équipements domotiques comprennent une interface homme-machine (parfois désignée par l'acronyme IHM). L'interface homme-machine comprend un écran E17 et un clavier incluant au moins une touche. Le clavier peut être constitué par des touches virtuelles sur un écran tactile.

L'installation, en particulier chaque équipement domotique E de l'installation, comprend des éléments matériels E10, E11, E12, E13, E14, E15, E16, E20 et/ou des éléments logiciels mettant en oeuvre des étapes du procédé objet de l'invention. Les éléments matériels et/ou logiciels peuvent comprendre un microprocesseur E10 et un émetteur et/ou un récepteur E20 de signaux. Les éléments matériels et/ou logiciels peuvent comprendre des modules logiciels. Les éléments matériels et/ou logiciels peuvent comprendre :
- Un élément E11 de détection de proximité entre un premier équipement domotique et un deuxième équipement domotique ;
- Un élément E12 de détermination d'un premier identifiant d'un premier équipement domotique ;
- Un élément E13 d'obtention d'une interface homme-machine ;
- Un élément E14 de fourniture de l'interface homme-machine ;
- Un élément E15 d'analyse d'un résultat d'une exécution par un utilisateur d'une action de confirmation ;
- Un élément E16 de déclenchement de la configuration d'une installation domotique, la configuration étant subordonnée au résultat ;
- Un écran E17 d'affichage, notamment un écran tactile.

Les éléments E11 à E16 peuvent être compris, au moins en partie, dans le microprocesseur.

L'écran E17 permet d'afficher les interfaces. En particulier, il permet d'afficher de manière successive et/ou exclusive une interface de commande et une interface de configuration.

L'interface homme-machine de commande permet la commande d'un ou plusieurs équipements en utilisation normale de l'installation. L'interface homme-machine de commande présente au moins certains éléments, notamment des éléments essentiels et/ou des boutons, permettant la commande d'un ou plusieurs équipements. De préférence, elle comprend tous les éléments permettant la commande d'un ou plusieurs équipements.

L'interface homme-machine de configuration permet la configuration ou le réglage d'un ou plusieurs équipements. L'interface homme-machine de configuration présente au moins certains éléments, notamment des éléments essentiels et/ou des boutons, permettant la configuration ou le réglage d'un ou plusieurs équipements. De préférence, elle comprend tous les éléments permettant la configuration d'un ou plusieurs équipements.

### Premier mode d'exécution

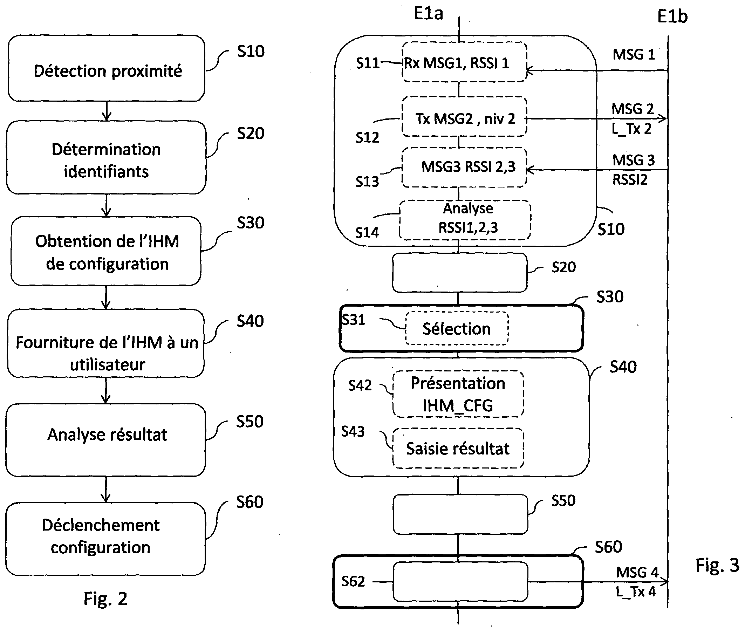

Un premier mode d'exécution du procédé de configuration selon l'invention est maintenant décrit en référence aux figures 2 et 3.

Dans ce premier mode, l'équipement domotique mettant en oeuvre l'invention est un point de commande bidirectionnel E1a disposant d'éléments d'affichage et de saisie. Ce point de commande est déjà membre du réseau domotique et détient des informations de configuration, par exemple une clé de chiffrement commune à tous les équipements domotiques de l'installation, qui doit être transmise à un actionneur E1b, à intégrer à l'installation. Cet actionneur E1b est apte à communiquer selon le même protocole, par exemple le protocole io homecontrol ®, que les autres équipements constituant le réseau local au sein de l'installation. Le protocole utilise avantageusement des signaux radiofréquences.

Selon ce premier mode d'exécution, le procédé de configuration comprend :
- une étape de détection S10 de proximité entre :
   - le premier équipement domotique E1a appartenant à l'installation domotique 1 et
   - le deuxième équipement domotique E1b susceptible d'être configuré ou intégré dans l'installation domotique 1 ;
- une étape de détermination S20
   - d'un premier identifiant ID1 du premier équipement domotique E1a et/ou
   - d'un deuxième identifiant ID2 du deuxième équipement domotique E1b ;
- une étape d'obtention S30 d'une interface homme-machine de configuration IHM_CFG, en fonction du premier et/ou du deuxième identifiant ID1, ID2, l'interface homme-machine de configuration IHM_CFG comprenant au moins une invitation à exécuter une action de confirmation CNF par un utilisateur ;
- une étape de fourniture S40 à l'utilisateur de l'interface homme-machine de configuration IHM_CFG ;
- une étape d'analyse S50 d'un résultat RES de l'exécution par l'utilisateur de l'action de confirmation CNF ;
   - une étape de déclenchement S60 de la configuration de l'installation domotique 1, subordonnée au résultat RES.

Dans ce premier mode d'exécution, l'étape de détection S10 est basée sur un principe de mesure de la puissance des signaux radio échangés entre les deux équipements domotiques E1a et E1b. Ce principe est illustré en figure 3. Dans une première sous-étape de réception S11, le point de commande E1a reçoit un premier message MSG1 en provenance de l'actionneur E1b. Ce premier message MSG1 est reçu avec un niveau RSSI1 de réception RSSI (siglaison de l'anglais Received Signal Strength Indication). Si ce niveau est supérieur à une première valeur prédéterminée tenant compte des caractéristiques de sensibilité radio de l'équipement récepteur, ici le point de commande, l'élément récepteur E1a déduit que l'équipement initiateur, ici l'actionneur, se situe à proximité.

Dans cet exemple, l'équipement EQ_init, initiateur des échanges par radiofréquence, est l'actionneur E1b, qui peut, par exemple, après son installation, émettre périodiquement des messages pour se faire connaître des autres équipements domotiques de l'installation, en vue d'être appairé avec certains de ces équipements, et être ainsi intégré dans l'installation domotique. Les messages sont parfois évoqués par la désignation MSG.

Alternativement, l'équipement initiateur EQ_init peut être le point de commande bidirectionnel E1a, qui peut, par exemple, envoyer un message de diffusion (« broadcast » en anglais) adressé à tous les équipements de l'installation, pour déclencher l'émission par les équipements susceptibles d'être intégrés et/ou configurés, des messages permettant leur découverte.

Le procédé comprend, après la première sous-étape de réception S11 :
- une première sous-étape d'émission S12 d'un deuxième message MSG2 à destination de l'équipement initiateur EQ_init, dans cet exemple l'actionneur E1b, le deuxième message MSG2 étant émis avec un premier niveau d'émission L_Tx1, notamment un premier niveau de puissance d'émission ;
- une deuxième sous-étape de réception S13 d'un troisième message MSG3 en provenance de l'équipement initiateur EQ_init, le troisième message MSG3 comprenant une information relative au niveau, notamment niveau RSSI, de réception RSSI2 du deuxième message MSG2 par l'équipement initiateur EQ_init ;
- une sous-étape S14 d'analyse de l'information relative au deuxième niveau de réception RSSI2.

Le procédé peut prévoir une détermination préalable, pour une installation donnée, des tables de correspondance entre des niveaux de réception, des types de l'émetteur et du récepteur, d'une part, et des distances estimées, d'une autre part. Ces distances estimées sont ensuite comparées avec des valeurs seuils, pour déterminer si elles sont conformes à une condition de proximité. Il est à noter que la condition de proximité peut être différente selon les types des équipements impliqués dans le procédé : par exemple un actionneur pour volet roulant, ayant une position fixe et une certaine hauteur par rapport à un utilisateur, peut être considéré à proximité d'un point de commande si la distance estimée entre cet actionneur et un point de commande activé par l'utilisateur est inférieure à 1 m. Si les équipements concernés sont deux points de commande mobiles, les équipements peuvent être considérés comme se situant à proximité si la distance estimée est de quelques centimètres. De cette manière, le procédé de configuration est adapté à différents types d'équipements domotiques, et n'est pas limité à une détection de proximité de type « NFC » (siglaison de l'anglais Near Field Communication).

Le point de commande E1a, connaissant le niveau avec lequel il a émis le deuxième message MSG2, les caractéristiques de l'installation, le type d'équipement avec lequel les échanges sont effectués, et le niveau RSSI2 avec lequel ce même message MSG2 a été reçu par l'actionneur E1b, il peut déterminer si la condition de proximité est remplie.

Dans ce premier mode d'exécution, après l'étape de détection S10 de proximité, le point de commande E1a détermine, lors de l'étape S20, l'identifiant ID2 du deuxième équipement domotique E1b. Cet identifiant peut être contenu dans les messages échangés lors des sous-étapes S11-S13.

Ensuite, le point de commande E1a obtient, lors de l'étape S30 une interface homme-machine de configuration IHM_CFG comprenant au moins une invitation à exécuter une action de confirmation CNF par un utilisateur.

Dans cet exemple, l'étape d'obtention S30 de l'interface homme-machine de configuration IHM_CFG comprend une sous-étape de sélection S31 parmi un ensemble prédéfini d'interfaces homme-machine de configuration IHM_CFGj, stockées en mémoire du point de commande E1a. La sélection se fait en fonction du deuxième identifiant ID2 de l'actionneur E1b.

Ensuite, lors de l'étape de fourniture S40, le point de commande E1a, qui dispose d'éléments d'affichage et de saisie, exécute
- une sous-étape de présentation S42, via ses éléments d'affichage, de l'interface homme-machine de configuration IHM_CFG à l'utilisateur, l'invitant à effectuer une action de confirmation, par exemple la saisie d'un code PIN, et/ou l'affichage d'un message de confirmation pour l'appairage des équipements identifiés par ID1, ID2.

Cette sous-étape de présentation est suivie
- d'une sous-étape de saisie S43 de l'action de confirmation CNF exécutée par l'utilisateur.

Le résultat RES de l'exécution par l'utilisateur de l'action de confirmation CNF est analysé lors de l'étape d'analyse S50 ; si le résultat RES est positif, la configuration de l'installation domotique est déclenchée lors de l'étape de déclenchement S60.

Si l'action de confirmation n'est pas exécutée, ou le résultat RES de l'exécution n'est pas conforme au résultat attendu, la configuration de l'installation n'est pas déclenchée, ce qui apporte un élément de sécurité à l'opération de configuration.

Dans ce premier mode d'exécution, l'étape de déclenchement S60 comprend une sous-étape d'émission S62 d'un quatrième message MSG4 à destination de l'équipement initiateur EQ_init, dans cet exemple l'actionneur E1b.

Le message MSG4 peut contenir par exemple une seule information, comme une clé de chiffrement commune de l'installation, qui est transmise à l'équipement à configurer E1b. Le message MSG4 peut être suivi d'autres messages de configuration, l'ensemble de ces messages pouvant contenir des paramètres de réglage, des scénarii à exécuter, ou des mises à jour du logiciel de l'équipement à configurer E1b.

Ce quatrième message MSG4 peut être émis avec un deuxième niveau d'émission L_Tx2, inférieur au premier niveau d'émission L_Tx1, assurant ainsi un encombrement moindre de l'environnement radio, et apportant un élément supplémentaire de sécurité, car seulement l'équipement situé à proximité reçoit correctement le quatrième message MSG4 (et les messages suivants, si la configuration de l'équipement E1b nécessite plus de messages), émis avec le même niveau d'émission L_Tx2. Comme déjà expliqué pour les niveaux de réception, les niveaux d'émission peuvent être déterminés pour une installation donnée et pour des types d'équipements donnés : si l'équipement à configurer E1b est un actionneur pour la motorisation d'un volet roulant, le niveau d'émission sera, par exemple, dimensionné pour une portée d'environ un mètre ; si l'équipement à configurer est un point de commande, la portée nécessaire peut être de quelques centimètres. De cette manière, le procédé peut assurer la configuration des équipements utilisant les éléments d'émission/réception nécessaires à la communication selon le protocole dans le réseau local à l'installation, sans moyens supplémentaires, par exemple de type NFC. Par conséquent, il n'y a pas de coût supplémentaire, et le procédé reste applicable à des équipements situés à une distance supérieure aux distances connues pour le fonctionnement de type NFC (typiquement quelques centimètres).

### Deuxième mode d'exécution

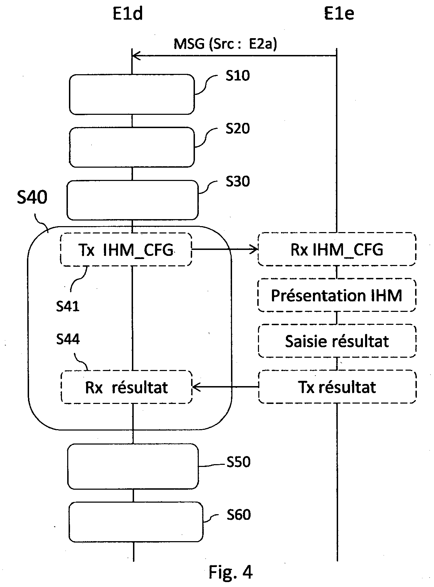

Un deuxième mode d'exécution du procédé de configuration est maintenant décrit en référence à la figure 4.

Le deuxième mode d'exécution présente également les étapes telles que représentées à la figure 2.

Le premier équipement E1d, déjà membre de l'installation domotique, est un actionneur, par exemple un actionneur pour volet roulant qui ne dispose pas d'éléments d'affichage et de saisie. Le deuxième équipement E1e susceptible d'être configuré est un point de commande, disposant de tels éléments.

Le procédé est exécuté par le premier équipement domotique E1d, appartenant à l'installation domotique.

Les étapes de détection S10, de détermination S20, d'obtention S30, et les sous-étapes correspondantes sont similaires aux étapes déjà décrites pour le premier mode d'exécution.

L'étape de fourniture S40 comprend une sous-étape d'envoi S41 à un équipement domotique destinataire, dans cet exemple l'équipement à configurer E1e, disposant d'éléments d'affichage et de saisie, d'au moins un message comprenant des informations pour définir l'interface homme-machine de configuration IHM_CFG. Ces informations peuvent être présentées sous forme de fichier contenant une image matricielle à afficher, de type « bitmap », ou sous forme de liste d'objets avec leurs attributs, permettant de générer localement une image vectorielle à présenter à l'utilisateur. Les informations peuvent aussi contenir une indication permettant à l'équipement E1e de sélectionner dans sa propre mémoire une interface homme-machine de configuration, parmi une pluralité d'interfaces de configuration IHM_CFGj. Cette interface est ensuite présentée à l'utilisateur, l'invitant à confirmer l'action de configuration. Les informations envoyées par l'actionneur E1d lors de la sous-étape d'envoi S41 peuvent contenir aussi une indication du format des données attendues lors de l'exécution de l'action de confirmation. Cette action peut consister à saisir une réponse utilisant le clavier du point de commande E1e.

L'actionneur E1d reçoit ensuite, lors d'une sous-étape de réception S44 depuis l'équipement domotique destinataire E1e, un message comprenant le résultat de l'exécution par l'utilisateur de l'action de confirmation CNF.

Les étapes suivantes, d'analyse S50 et de déclenchement S60, sont similaires aux étapes portant les mêmes références, décrites pour le premier mode d'exécution.

### Troisième mode d'exécution

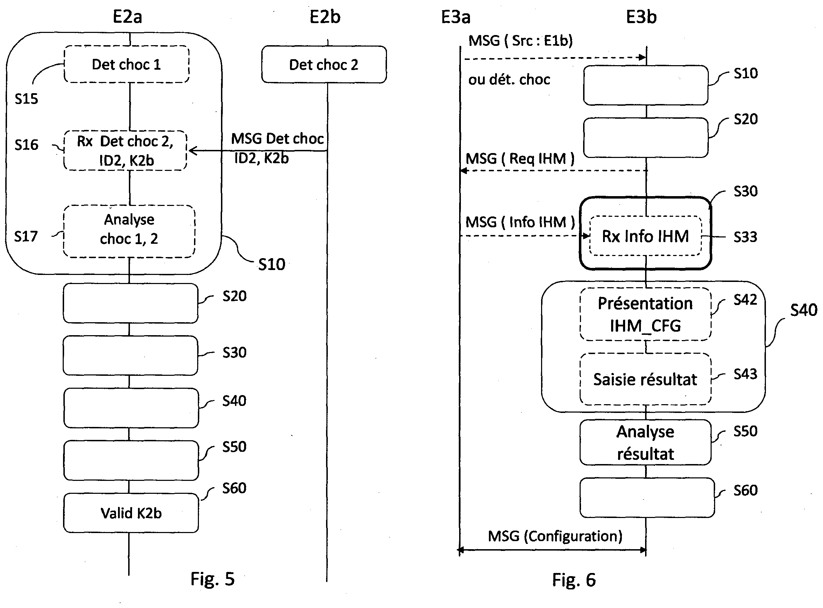

Un troisième mode d'exécution est maintenant décrit en référence à la figure 5. L'équipement domotique mettant en oeuvre le procédé objet de l'invention est un point de commande bidirectionnel E2a disposant d'éléments d'affichage et de saisie. Ce point de commande est déjà membre du réseau domotique et détient des informations de configuration à transmettre à un deuxième équipement domotique E2b, à intégrer dans l'installation.

Ce deuxième équipement E2b, susceptible d'être configuré, peut être, par exemple, un point de commande mural pour volets roulants, ou un point de commande mobile, un capteur, ou encore un actionneur pour des équipements d'éclairage, de chauffage, de ventilation ou de climatisation. Dans tous les cas, ce deuxième équipement est accessible à l'utilisateur, qui peut provoquer un choc mécanique entre le premier E2a et le deuxième E2b équipements. Le point de commande bidirectionnel E2a dispose d'éléments d'émission et réception pour communiquer au sein de l'installation. L'équipement E2b à configurer est équipé au moins d'éléments d'émission, lui permettant de communiquer en mode unidirectionnel. Dans la suite de cet exemple, on suppose que l'équipement E2b susceptible d'être configuré est un capteur unidirectionnel. La sécurité des échanges avec un tel équipement est assurée par l'autorisation qui est accordée aux autres équipements d'accepter des messages en provenance de cet équipement unidirectionnel E2b. Les messages peuvent aussi être chiffrés par l'équipement unidirectionnel E2b. La configuration de l'installation domotique par l'intégration de l'équipement E2b consiste à distribuer l'identifiant ID2 et/ou la clé de chiffrement K2b propres à l'équipement unidirectionnel E2b aux équipements avec lesquels il est destiné à communiquer.

Dans ce mode d'exécution, l'étape de détection S10 comprend la détection d'un choc entre le premier équipement domotique E2a et le deuxième équipement domotique E2b. Cette étape peut être réalisée à l'aide d'éléments de détection de choc, par exemple des accéléromètres, intégrés dans les équipements concernés.

Le point de commande bidirectionnel E2a détecte donc un choc mécanique lors d'une sous-étape S15.

Ce choc est également détecté par l'équipement unidirectionnel E2b qui, suite à cette détection de choc, envoie un message, par exemple en mode diffusion (« broadcast » en anglais) ou vers une ou plusieurs adresses prédéfinies, dont l'adresse du premier équipement E2a.

Ce message notifie aux équipements destinataires un événement (evt) «détection de choc», et contient également l'identifiant ID2 et/ou la clé de chiffrement K2b de l'équipement unidirectionnel E2b.

Le message de notification est reçu par le point de commande bidirectionnel E2a lors d'une sous-étape de réception S16. Si le message de notification en provenance de l'équipement unidirectionnel E2b est reçu pendant une courte durée prédéterminée, à partir de la détection de choc par le point de commande bidirectionnel E2a, ce dernier peut déduire que le choc a eu lieu avec l'équipement unidirectionnel E2b. Dans la suite du procédé, l'interface homme-machine de configuration IHM_CFG invite l'utilisateur à confirmer l'opération de configuration concernant le point de commande unidirectionnel E2b. De cette manière, si un doute subsiste quant à l'identité des équipements concernés par le choc, il est levé par l'action de confirmation exécutée par l'utilisateur.

Les étapes de détermination S20, d'obtention S30, de fourniture S40 et d'analyse du résultat S50 sont exécutées comme décrit précédemment, y compris les sous-étapes, le cas échéant.

L'étape de déclenchement S60 de la configuration de l'installation comprend la validation de l'identifiant ID2 et de la clé K2b de l'équipement unidirectionnel E2b. Autrement dit, le point de commande bidirectionnel E2a est autorisé à partir de ce moment à prendre en compte les messages fonctionnels en provenance de l'équipement unidirectionnel E2b.

Si d'autres équipements de l'installation sont destinés à recevoir des messages en provenance de l'équipement unidirectionnel E2b, ils reçoivent au moins un message envoyé par le point de commande bidirectionnel E2a, leur transmettant les informations concernant l'équipement E2b (ID2, K2b) et les informant qu'ils sont autorisés à recevoir des messages en provenance de cet équipement.

La sélection des équipements destinés à communiquer avec l'équipement unidirectionnel E2b nouvellement intégré dans l'installation, peut être faite par l'utilisateur, l'interface IHM_CFG proposant un menu de sélection parmi les équipements de l'installation.

### Quatrième mode d'exécution

Un quatrième mode d'exécution du procédé de configuration est maintenant décrit en référence à la figure 6. L'équipement domotique mettant en oeuvre le procédé objet de l'invention est cette fois le deuxième équipement domotique E3b, susceptible d'être intégré dans l'installation. Cet équipement peut être par exemple un point de commande bidirectionnel, disposant d'éléments d'affichage et de saisie.

L'utilisateur rapproche le deuxième équipement E3b du premier équipement bidirectionnel E3a, appartenant déjà à l'installation, et détenant des informations de configuration, par exemple la clé commune de l'installation.

La proximité des deux équipements peut être détectée lors de l'étape de détection S10 selon l'une des variantes décrites, c'est-à-dire par détection de choc ou par analyse de signaux radio.

L'étape d'obtention S30 de l'interface-homme machine de configuration IHM_CFG comprend une sous-étape de réception S33 d'au moins un message en provenance du premier équipement domotique E3a, ce message comprenant des informations pour définir l'interface homme-machine de configuration IHM_CFG.

Cette interface invite l'utilisateur à confirmer l'opération de configuration, par exemple l'appairage entre les deux équipements E3a, E3b, lors de l'étape de fourniture S40. La suite du procédé est exécutée de manière similaire aux modes d'exécution déjà décrits.

Il est important de noter que toutes ces étapes sont exécutées par le deuxième équipement domotique susceptible d'être configuré, E3b, contrairement aux modes d'exécution précédemment décrits.

Lors de l'étape d'analyse S50, le deuxième équipement domotique E3b transmet, au premier équipement E3a, le résultat RES de l'exécution par l'utilisateur de l'action de confirmation.

Si l'interface IHM_CFG demande à l'utilisateur de saisir un code d'accès, le résultat RES transmis à l'équipement E3a peut être le code saisi. L'équipement E3a, déjà membre de l'installation, peut vérifier le code et transmettre en retour un message contenant une information explicite sur sa validité.

Alternativement, l'information de validité du code peut être implicite, le message de retour contenant directement une information de configuration. Dans ce cas, les étapes d'analyse S50 et de déclenchement S60 sont exécutées en même temps. Suite à la réception de ce message de retour, l'équipement E3b passe en mode de configuration, et enregistre les informations transmises.

### Cinquième mode d'exécution

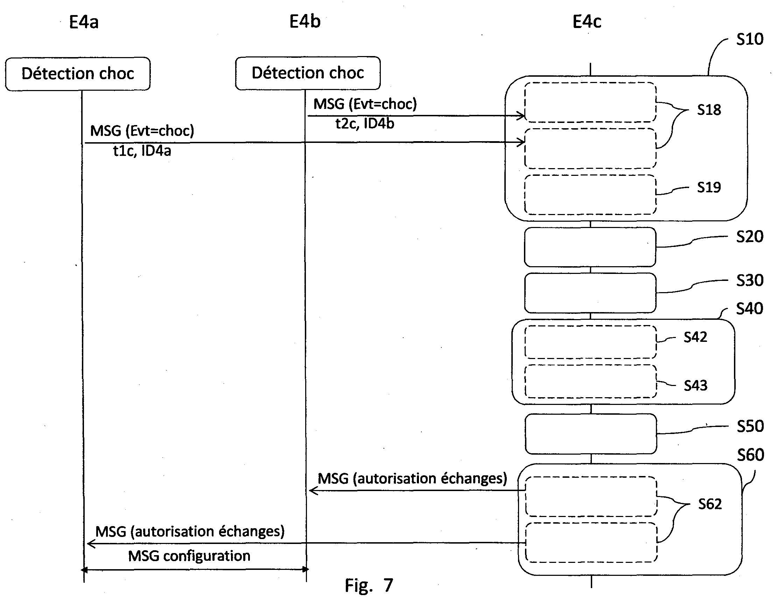

Un cinquième mode d'exécution du procédé de configuration est maintenant décrit en référence à la figure 7.

Le premier équipement domotique E4a appartenant à l'installation est dans cet exemple un actionneur. Cet actionneur E4a peut être du même type que ceux décrits pour le troisième mode d'exécution.

Le deuxième équipement domotique E4b est, par exemple, un équipement bidirectionnel.

Les équipements E4a, E4b ne disposent pas d'éléments d'affichage et de saisie.

Comme dans le troisième mode d'exécution, l'utilisateur peut provoquer un choc mécanique entre ces deux équipements E4a, E4b.

Dans ce mode d'exécution, l'équipement domotique mettant en oeuvre le procédé objet de l'invention est un troisième équipement E4c, disposant d'éléments d'affichage et de saisie, et distinct du premier E4a et du deuxième E4b équipements.

Cet équipement E4c peut être une unité centrale de commande de l'installation, par exemple une box domotique ou une télécommande bidirectionnelle avec écran et clavier, et disposant en outre d'éléments d'accès à un serveur distant, par exemple via Internet.

L'utilisateur qui souhaite intégrer le deuxième équipement E4b dans l'installation domotique, et l'appairer avec le premier équipement domotique E4a, provoque un choc mécanique entre ces deux équipements.

L'étape de détection de proximité S10, exécutée par l'unité centrale de commande E4c, comprend une sous-étape S18 de réception de messages de notification d'un choc détecté, en provenance du premier équipement domotique E4a, respectivement du deuxième équipement E4b. Si les moments de réception des deux messages sont séparés par un intervalle de temps inférieur à une valeur prédéterminé, de l'ordre de grandeur de la durée de transmission d'un message, l'équipement domotique E4c déduit lors d'une sous-étape S19 que le choc détecté par les deux équipements a eu lieu entre ces deux mêmes équipements, et donc qu'ils sont situés à proximité l'un de l'autre.

L'étape de détermination S20 des identifiants est exécutée par analyse des messages de notification reçus lors de l'étape S10, qui contiennent chacun l'identifiant de son émetteur.

L'étape d'obtention S30 comprend une sous-étape de téléchargement S35 par l'unité centrale de commande E4c, depuis un serveur distant, par exemple via Internet, des informations pour définir l'interface homme-machine de configuration IHM_CFG.

Alternativement, cette étape peut être exécutée selon une des méthodes précédemment décrites, par lecture et sélection en mémoire, ou par réception des messages en provenance du premier E4a et/ou du deuxième E4b équipements.

L'unité centrale de commande E4c fournit ensuite l'interface IHM_CFG à l'utilisateur, comme décrit précédemment, en exécutant une sous-étape de présentation S42 et une sous-étape de saisie S43 de l'action de confirmation.

Si le résultat RES obtenu lors de l'étape d'analyse S50 est positif, l'unité de commande centrale E4c déclenche, lors de l'étape S60, la configuration de l'installation, en envoyant, lors de sous-étapes S62, au premier E4a et deuxième E4b équipements, des messages les autorisant à transmettre et/ou recevoir des informations de configuration.

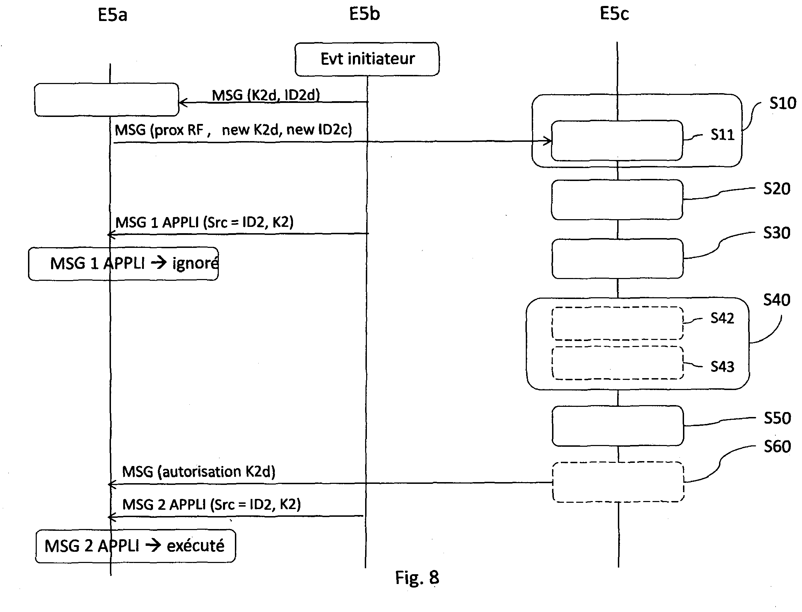

En variante illustrée par la figure 8, le deuxième équipement E5b susceptible d'être configuré ou intégré dans le réseau est unidirectionnel, par exemple un capteur ou un point de commande unidirectionnel. Le premier équipement domotique E5a appartenant au réseau est par exemple un actionneur pour volet roulant, et l'équipement domotique E5c mettant en oeuvre l'invention est une unité centrale de commande de l'installation domotique, comme dans l'exemple précédent.

Suite à un événement initiateur, par exemple la mise sous tension, ou l'appui sur une touche, ou la détection d'un choc ou d'un mouvement effectué par l'utilisateur, l'équipement unidirectionnel E5b émet un ou plusieurs messages pour se faire découvrir par les autres équipements de l'installation. Un tel message contient l'identifiant ID2d et la clé de chiffrement K2d propres à cet équipement.

Le message est reçu par l'actionneur E5a, situé à proximité, dans ce cas dans la zone de portée radio de l'équipement unidirectionnel E5b. Suite à cette réception, l'actionneur E5a envoie un message informant l'unité centrale de commande E5c de la proximité avec le nouvel équipement à configurer E5b.

Dans cet exemple, l'étape de détection S10, exécuté par l'unité centrale de commande E5c, comprend une sous-étape de réception S11 d'un premier message MSG1, en provenance de l'équipement domotique E5a. Ce message informe le troisième équipement domotique, dans l'exemple l'unité centrale de commande E5c, d'une proximité entre le premier E5a et le deuxième E5b équipements domotiques. En recevant ce message, l'unité de commande centrale E5c peut déterminer de manière indirecte la proximité entre le premier E5a et le deuxième E5b équipements domotiques.

Les étapes suivantes, S20, S30, S40 et S50, sont similaires aux étapes décrites dans l'exemple précédent.

L'étape de déclenchement S60 de la configuration de l'installation comprend l'émission d'un message à destination de l'actionneur E5a, autorisant ce dernier à accepter des messages en provenance de l'équipement unidirectionnel E5b.

Il est important de noter dans cet exemple que le procédé de configuration permet l'intégration dans l'installation domotique d'un équipement unidirectionnel, qui n'est pas apte à recevoir de message de configuration.

### Sixième mode d'exécution

Un sixième mode d'exécution du procédé de configuration est décrit ci-après.

Dans ce sixième mode, les premier et deuxième équipements domotiques sont par exemple deux équipements domotiques identiques ou similaires, par exemple des actionneurs. Dans ce mode, le procédé de configuration permet de dupliquer, au niveau du deuxième équipement, des réglages effectués préalablement, au niveau du premier équipement. Le réglage du premier actionneur peut être réalisé préalablement au procédé de configuration.

Selon ce sixième mode d'exécution, le procédé peut être exécuté globalement comme la succession de deux procédures de configuration telles que décrites précédemment en relation avec les figures 3 à 6 entre le premier équipement et l'outil de configuration, puis entre le deuxième équipement et l'outil de configuration. La procédure de configuration mise en oeuvre entre le premier équipement et l'outil de configuration permet de transférer des données de configuration du premier équipement à l'outil de configuration. La procédure de configuration mise en oeuvre entre le deuxième équipement et l'outil de configuration permet de transférer ces données de configuration de l'outil de configuration au deuxième équipement.

Alternativement à la première procédure, le premier équipement domotique peut être configuré par un outil de configuration dédié et les données de configuration du premier équipement domotique peuvent être stockées au niveau de l'outil. Dès lors, une seule procédure telle que celles décrites en relation avec les figures 3 à 6 permet de transférer ces données de configuration de l'outil de configuration au deuxième équipement.

### Septième mode d'exécution

Un septième mode d'exécution du procédé de configuration est décrit ci-après.

Dans ce septième mode, le procédé de configuration est utilisé pour vérifier les appairages réalisés, notamment après une phase d'appairage entre un point de commande et plusieurs actionneurs. Pour ce faire, une procédure telle que décrite précédemment relativement aux figures 3 à 6 peut être lancée, cette procédure provoquant une réaction d'un actionneur dès que le point de commande est à proximité de l'actionneur, si le point de commande et l'actionneur ont été préalablement appairés. Dans le cas contraire, il n'y a pas de réaction de l'actionneur. On peut également prévoir deux réactions différentes de l'actionneur selon que le point de commande et l'actionneur sont ou non appairés.

Sauf incompatibilité technique et ou logique, toutes les caractéristiques des différents modes de réalisation précédemment décrits peuvent être combinées entre elles.

L'étape de détection S10 de proximité peut comprendre, selon les modes d'exécution, des étapes consistant :
- à détecter un choc entre un premier et un deuxième équipements domotiques, directement par l'équipement domotique qui met en oeuvre le procédé de configuration ; ou
- à recevoir un ou plusieurs messages notifiant la détection d'un choc par le premier et/ou le deuxième équipements domotiques ; ou
- à recevoir un ou plusieurs messages par radiofréquences en provenance du premier ou du deuxième équipement domotique, et à analyser le niveau de puissance de réception RSSI de ce message.

L'étape d'obtention S30 d'une interface homme-machine de configuration IHM_CFG, peut comprendre, selon les modes d'exécution, des étapes consistant :
- à sélectionner parmi un ensemble d'interfaces homme-machine de configuration stockées dans la mémoire de l'équipement ; ou
- à recevoir un ou plusieurs messages par radiofréquences en provenance du premier ou du deuxième équipement domotique, ces messages comprenant des informations permettant de définir, au niveau de l'équipement domotique mettant en oeuvre le procédé, l'interface homme-machine de configuration IHM_CFG ; ou
- à effectuer un téléchargement depuis un serveur de telles informations.

L'étape de fourniture S40 à l'utilisateur de l'interface homme-machine de configuration IHM_CFG, peut comprendre, selon les modes d'exécution, des étapes consistant :
- à présenter à l'utilisateur, via les éléments d'affichage, de l'invitation à exécuter une action de confirmation ; et à saisir, via les éléments de saisie, un résultat de l'exécution de cette action ; ou
- à envoyer à un équipement destinataire disposant des éléments d'affichage et de saisie, d'au moins un message comprenant des informations pour définir l'interface homme-machine de configuration ; et à recevoir depuis l'équipement domotique destinataire d'au moins un message comprenant le résultat de l'exécution par l'utilisateur de l'action de confirmation.

L'étape de déclenchement S60 de l'interface homme-machine de configuration IHM_CFG, peut comprendre, selon les modes d'exécution, des étapes consistant :
- à envoyer des informations de configuration ;
- à valider des informations de configuration déjà reçues ;
- à autoriser le transfert des données de configuration entre le premier et le deuxième équipement, si le procédé de configuration est exécuté par un troisième équipement domotique ;
- à recevoir, depuis le premier équipement domotique, des données de configuration, et de les transmettre au deuxième équipement.

Dans ce document, les adjectifs numéraux « premier », « deuxième » et « troisième » employés pour qualifier les équipements ont uniquement un sens distinctif. En particulier, ils n'ont pas de sens temporel.

## Revendications

1. Procédé de configuration d'une installation domotique (1), comprenant des équipements domotiques aptes à communiquer entre eux selon un même protocole et à constituer un réseau local, ce procédé comprenant :
- une étape de détection (S10) de proximité entre
- un premier équipement domotique (E1a, E1d, E2a, E3a, E4a, E5a), appartenant à l'installation domotique (1), et
- un deuxième équipement domotique (E1b, E1e, E2b, E3b, E4b, E5b), susceptible d'être configuré ou intégré dans l'installation domotique (1) ;
- une étape de détermination (S20)
- d'un premier identifiant (ID1) du premier équipement domotique (E1a, E1d, E2a, E3a, E4a, E5a) et/ou
- d'un deuxième identifiant (ID2) du deuxième équipement domotique (E1b, E1e, E2b, E3b, E4b, E5b) ;
- une étape d'obtention (S30) d'une interface homme-machine de configuration (IHM_CFG), en fonction du premier et/ou du deuxième identifiant (ID1, ID2), l'interface homme-machine de configuration (IHM_CFG) comprenant au moins une invitation à exécuter une action de confirmation (CNF) par un utilisateur et l'interface homme-machine de configuration (IHM_CFG) étant obtenue de manière automatique, suite à l'étape de détection (S10) de proximité entre les premier et deuxième équipements domotiques (E1a, E1d, E2a, E3a, E4a, E5a ; E1b, E1e, E2b, E3b, E4b, E5b) ;
- une étape de fourniture (S40) à l'utilisateur de l'interface homme-machine de configuration (IHM_CFG) ;
- une étape d'analyse (S50) d'un résultat (RES) de l'exécution par l'utilisateur de l'action de confirmation (CNF) ;
- une étape de déclenchement (S60) de la configuration de l'installation domotique (1), subordonnée au résultat (RES) ;
le procédé étant mis en oeuvre par le premier équipement domotique (E1a, E1d, E2a, E3a, E4a, E5a) ou par le deuxième équipement domotique (E1b, E1e, E2b, E3b, E4b, E5b) ou par un troisième équipement domotique (E4c, E5c) dans l'installation domotique (1), **caractérisé en ce que**, avant l'étape de détection (S10) de proximité, l'utilisateur n'a accès qu'à une interface homme-machine de commande, et **en ce que** les interfaces homme-machine de commande et de configuration (IHM_CFG) sont accessibles de manière exclusive, c'est-à-dire que lorsque l'une des interfaces homme-machine est accessible à l'utilisateur, l'autre ne l'est pas.

2. Procédé de configuration selon la revendication 1, **caractérisé en ce que** l'étape de détection (S10) comprend une sous-étape de détection d'un choc (S15, S19) entre le premier équipement domotique (E2a, E4a) et le deuxième équipement domotique (E2b, E4b).

3. Procédé de configuration selon la revendication précédente, **caractérisé en ce que** l'étape de détection (S10) comprend en outre une sous-étape de réception (S16, S18) d'au moins un message de notification d'un choc détecté par le premier équipement domotique (E4a) et/ou par le deuxième équipement domotique (E2b, E4b).

4. Procédé de configuration selon la revendication 1, **caractérisé en ce que** l'étape de détection (S10) comprend une première sous-étape de réception (S11) d'un premier message (MSG1) en provenance d'un équipement initiateur (EQ_init) parmi le premier équipement domotique (E1a, E5a) et le deuxième équipement domotique (E2b), le premier message (MSG1) étant reçu avec un niveau de réception (RSSI1) supérieur à une première valeur prédéterminée.

5. Procédé de configuration selon la revendication précédente, **caractérisé en ce que** l'étape de détection (S10) comprend en outre :
- une première sous-étape d'émission (S12) d'un deuxième message (MSG2) à destination de l'équipement initiateur (EQ_init), le deuxième message (MSG2) étant émis avec un premier niveau d'émission (L_Tx1) ;
- une deuxième sous-étape de réception (S13) d'un troisième message (MSG3) en provenance de l'équipement initiateur (EQ_init), le troisième message (MSG3) comprenant une information relative à un deuxième niveau de réception (RSSI2) du deuxième message (MSG2) par l'équipement initiateur (EQ_init) ;
- une sous-étape (S14) d'analyse de l'information relative au deuxième niveau de réception (RSSI2).

6. Procédé de configuration selon la revendication précédente, **caractérisé en ce que** l'étape de déclenchement (S60) comprend une deuxième sous-étape d'émission (S62) d'un quatrième message (MSG4) à destination de l'équipement initiateur (EQ_init), le quatrième message (MSG4) étant émis avec un deuxième niveau d'émission (L_Tx2), inférieur au premier niveau d'émission (L_Tx1).

7. Procédé de configuration selon l'une des revendications précédentes, **caractérisé en ce que** l'étape de déclenchement (S60) comprend une étape de première réaction du premier et/ou du deuxième équipement domotique si les premier et deuxième équipements domotiques sont appairés et une étape de deuxième réaction du premier et/ou du deuxième équipement domotique si les premier et deuxième équipements domotiques ne sont pas appairés.

8. Procédé de configuration selon l'une des revendications précédentes, **caractérisé en ce que** l'étape de déclenchement (S60) comprend une étape de transfert de données de configuration du premier équipement domotique de type outil de configuration au deuxième équipement domotique, les données de configuration étant relatives à un troisième équipement domotique préalablement configuré et de type semblable ou similaire au deuxième équipement domotique.

9. Procédé de configuration selon l'une des revendications précédentes, **caractérisé en ce que** l'étape d'obtention (S30) comprend une sous-étape de réception (S33) d'au moins un message en provenance du premier ou du deuxième équipement domotique (E1a, E2b, E3a), ce message comprenant des informations de définition de l'interface homme-machine de configuration (IHM_CFG).

10. Procédé de configuration selon l'une des revendications 1 à 8, **caractérisé en ce que** l'étape d'obtention (S30) comprend une sous-étape de téléchargement (S35) depuis un serveur, des informations de définition de l'interface homme-machine de configuration (IHM_CFG).

11. Procédé de configuration selon l'une des revendications précédentes, **caractérisé en ce que** l'étape de fourniture (S40) comprend :
- une sous-étape d'envoi (S41) à un équipement domotique dit destinataire (E1e) disposant d'éléments d'affichage et d'éléments de saisie, d'au moins un message comprenant des informations de définition de l'interface homme-machine de configuration (IHM_CFG) ; et
- une sous-étape de réception (S44) d'un message émis par l'équipement dit destinataire comprenant le résultat de l'exécution par l'utilisateur de l'action de confirmation (CNF).

12. Equipement domotique (E) comprenant des éléments matériels (E10, E11 E12, E13, E14, E15, E16, E20) et/ou logiciels de mise en oeuvre d'étapes ou des étapes du procédé de configuration selon l'une des revendications 1 à 11.

13. Equipement domotique selon la revendication précédente, **caractérisé en ce que** les éléments matériels et/ou logiciels comprennent :
- Un élément (E11) de détection de proximité entre un premier équipement domotique et un deuxième équipement domotique ;
- Un élément (E12) de détermination d'un premier identifiant d'un premier équipement domotique ;
- Un élément (E13) d'obtention d'une interface homme-machine de configuration ;
- Un élément (E14) de fourniture de l'interface homme-machine de configuration ;
- Un élément (E15) d'analyse d'un résultat d'une exécution par un utilisateur d'une action de confirmation ;
- Un élément (E16) de déclenchement de la configuration d'une installation domotique, la configuration étant subordonnée au résultat ;
- Un écran (E17) d'affichage, notamment un écran tactile.

14. Installation domotique comprenant au moins un équipement domotique selon la revendication 12 ou selon la revendication 13.

## Patentansprüche

1. Verfahren zur Konfiguration einer Haustechnikanlage (1), die Haustechnikeinrichtungen umfasst, welche geeignet sind, untereinander nach demselben Protokoll zu kommunizieren und ein lokales Netzwerk zu bilden, wobei dieses Verfahren umfasst:
- einen Schritt der Detektion (S10) der Nähe zwischen
- einer ersten Haustechnikeinrichtung (E1a, E1d, E2a, E3a, E4a, E5a), die zu der Haustechnikanlage (1) gehört, und
- einer zweiten Haustechnikeinrichtung (E1b, E1e, E2b, E3b, E4b, E5b), die geeignet ist, konfiguriert oder in die Haustechnikanlage (1) integriert zu werden;
- einen Schritt des Bestimmens (S20)
- einer ersten Kennung (ID1) der ersten Haustechnikeinrichtung (E1a, E1d, E2a, E3a, E4a, E5a) und/oder
- einer zweiten Kennung (ID2) der zweiten Haustechnikeinrichtung (E1b, E1e, E2b, E3b, E4b, E5b);
- einen Schritt des Erhaltens (S30) einer Konfigurations-Mensch-Maschine-Schnittstelle (IHM_CFG) in Abhängigkeit von der ersten und/oder der zweiten Kennung (ID1, ID2), wobei die Konfigurations-Mensch-Maschine-Schnittstelle (IHM_CFG) mindestens eine Aufforderung umfasst, eine Bestätigungshandlung (CNF) durch einen Benutzer auszuführen, und die Konfigurations-Mensch-Maschine-Schnittstelle (IHM_CFG) automatisch nach dem Schritt der Detektion (S10) der Nähe zwischen den ersten und zweiten Haustechnikeinrichtungen (E1a, E1d, E2a, E3a, E4a, E5a; E1b, E1e, E2b, E3b, E4b, E5b) erhalten wird;
- einen Schritt des Bereitstellens (S40) der Konfigurations-Mensch-Maschine-Schnittstelle (IHM_CFG) für den Benutzer;
- einen Schritt der Analyse (S50) eines Ergebnisses (RES) der Ausführung der Bestätigungshandlung (CNF) durch den Benutzer;
- einen Schritt des Auslösens (S60) der Konfiguration der Haustechnikanlage (1), der von dem Ergebnis (RES) abhängig ist;
wobei das Verfahren von der ersten Haustechnikeinrichtung (E1a, E1d, E2a, E3a, E4a, E5a) oder von der zweiten Haustechnikeinrichtung (E1b, E1e, E2b, E3b, E4b, E5b) oder von einer dritten Haustechnikeinrichtung (E4c, E5c) in der Haustechnikanlage (1) umgesetzt wird, **dadurch gekennzeichnet, dass** der Benutzer vor dem Schritt der Detektion (S10) der Nähe nur Zugriff auf eine Bedien-Mensch-Maschine-Schnittstelle hat und dass die Bedien- und die Konfigurations-Mensch-Maschine-Schnittstellen (IHM_CFG) exklusiv zugänglich sind, d.h. dass, wenn eine der Mensch-Maschine-Schnittstellen für den Benutzer zugänglich ist, die andere dies nicht ist.

2. Konfigurationsverfahren nach Anspruch 1, **dadurch gekennzeichnet, dass** der Schritt der Detektion (S10) einen Teilschritt der Detektion eines Stoßes (S15, S19) zwischen der ersten Haustechnikeinrichtung (E2a, E4a) und der zweiten Haustechnikeinrichtung (E2b, E4b) umfasst.

3. Konfigurationsverfahren nach dem vorhergehenden Anspruch, **dadurch gekennzeichnet, dass** der Schritt der Detektion (S10) ferner einen Teilschritt des Empfangens (S16, S18) mindestens einer Nachricht zur Mitteilung eines Stoßes, der von der ersten Haustechnikeinrichtung (E4a) und/oder von der zweiten Haustechnikeinrichtung (E2b, E4b) detektiert wurde, umfasst.

4. Konfigurationsverfahren nach Anspruch 1, **dadurch gekennzeichnet, dass** der Schritt der Detektion (S10) einen ersten Teilschritt des Empfangens (S11) einer ersten Nachricht (MSG1) von einer initiierenden Einrichtung (EQ_init) unter der ersten Haustechnikeinrichtung (E1a, E5a) und der zweiten Haustechnikeinrichtung (E2b) umfasst, wobei die erste Nachricht (MSG1) mit einem Empfangspegel (RSSI1) empfangen wird, der über einem vorgegebenen ersten Wert liegt.

5. Konfigurationsverfahren nach dem vorhergehenden Anspruch, **dadurch gekennzeichnet, dass** der Schritt der Detektion (S10) ferner umfasst:
- einen ersten Teilschritt des Sendens (S12) einer zweiten Nachricht (MSG2) an die initiierende Einrichtung (EQ_init), wobei die zweite Nachricht (MSG2) mit einem ersten Sendepegel (L_Tx1) gesendet wird;
- einen zweiten Teilschritt des Empfangens (S13) einer dritten Nachricht (MSG3) von der initiierenden Einrichtung (EQ_init), wobei die dritte Nachricht (MSG3) eine Information über einen zweiten Empfangspegel (RSSI2) der zweiten Nachricht (MSG2) durch die initiierende Einrichtung (EQ_init) umfasst;
- einen Teilschritt (S14) der Analyse der Information über den zweiten Empfangspegel (RSSI2).

6. Konfigurationsverfahren nach dem vorhergehenden Anspruch, **dadurch gekennzeichnet, dass** der Schritt des Auslösens (S60) einen zweiten Teilschritt des Sendens (S62) einer vierten Nachricht (MSG4) an die initiierende Einrichtung (EQ_init) umfasst, wobei die vierte Nachricht (MSG4) mit einem zweiten Sendepegel (L_Tx2) gesendet wird, der unter dem ersten Sendepegel (L_Tx1) liegt.

7. Konfigurationsverfahren nach einem der vorhergehenden Ansprüche, **dadurch gekennzeichnet, dass** der Schritt des Auslösens (S60) einen Schritt der ersten Reaktion der ersten und/oder der zweiten Haustechnikeinrichtung umfasst, wenn die ersten und zweiten Haustechnikeinrichtungen gepairt sind, und einen Schritt der zweiten Reaktion der ersten und/oder der zweiten Haustechnikeinrichtung umfasst, wenn die ersten und zweiten Haustechnikeinrichtungen nicht gepairt sind.

8. Konfigurationsverfahren nach einem der vorhergehenden Ansprüche, **dadurch gekennzeichnet, dass** der Schritt des Auslösens (S60) einen Schritt der Übertragung von Konfigurationsdaten von der ersten Haustechnikeinrichtung vom Typ eines Konfigurationsinstruments an die zweite Haustechnikeinrichtung umfasst, wobei sich die Konfigurationsdaten auf eine zuvor konfigurierte dritte Haustechnikeinrichtung vom gleichen oder einem ähnlichen Typ wie die zweite Haustechnikeinrichtung beziehen.

9. Konfigurationsverfahren nach einem der vorhergehenden Ansprüche, **dadurch gekennzeichnet, dass** der Schritt des Erhaltens (S30) einen Teilschritt des Empfangens (S33) mindestens einer Nachricht von der ersten oder der zweiten Haustechnikeinrichtung (E1a, E2b, E3a) umfasst, wobei diese Nachricht Definitionsinformationen der Konfigurations-Mensch-Maschine-Schnittstelle (IHM_CFG) umfasst.

10. Konfigurationsverfahren nach einem der Ansprüche 1 bis 8, **dadurch gekennzeichnet, dass** der Schritt des Erhaltens (S30) einen Teilschritt des Herunterladens (S35) der Definitionsinformationen der Konfigurations-Mensch-Maschine-Schnittstelle (IHM_CFG) von einem Server umfasst.

11. Konfigurationsverfahren nach einem der vorhergehenden Ansprüche, **dadurch gekennzeichnet, dass** der Schritt des Bereitstellens (S40) umfasst:
- einen Teilschritt des Sendens (S41) von mindestens einer Nachricht, die Definitionsinformationen der Konfigurations-Mensch-Maschine-Schnittstelle (IHM_CFG) umfasst, an eine Haustechnikeinrichtung, Empfänger (E1e) genannt, die über Anzeige- und Eingabeelemente verfügt; und
- einen Teilschritt des Empfangens (S44) einer Nachricht, die von der Empfänger genannten Einrichtung gesendet wurde und das Ergebnis der Ausführung der Bestätigungshandlung (CNF) durch den Benutzer umfasst.

12. Haustechnikeinrichtung (E), die Hardwareelemente (E10, E11, E12, E13, E14, E15, E16, E20) und/oder Softwareelemente zur Umsetzung von Schritten oder der Schritte des Konfigurationsverfahrens nach einem der Ansprüche 1 bis 11 umfasst.

13. Haustechnikeinrichtung nach dem vorhergehenden Anspruch, **dadurch gekennzeichnet, dass** die Hardware- und/oder Softwareelemente umfassen:
- ein Element (E11) zur Detektion der Nähe zwischen einer ersten Haustechnikeinrichtung und einer zweiten Haustechnikeinrichtung;
- ein Element (E12) zur Bestimmung einer ersten Kennung einer ersten Haustechnikeinrichtung;
- ein Element (E13) zum Erhalten einer Konfigurations-Mensch-Maschine-Schnittstelle;
- ein Element (E14) zum Bereitstellen einer Konfigurations-Mensch-Maschine-Schnittstelle;
- ein Element (E15) zur Analyse eines Ergebnisses einer Ausführung einer Bestätigungshandlung durch einen Benutzer;
- ein Element (E16) zum Auslösen der Konfiguration einer Haustechnikanlage, wobei die Konfiguration von dem Ergebnis abhängig ist;
- einen Anzeigebildschirm (E17), insbesondere einen Touchscreen.

14. Haustechnikanlage, die mindestens eine Haustechnikeinrichtung nach Anspruch 12 oder nach Anspruch 13 umfasst.

## Claims

1. Method of configuring a home automation installation (1), comprising home automation devices capable of communicating with one another according to one and the same protocol and of constituting a local area network, this method comprising:
- a step of detection (S10) of proximity between
- a first home automation device (E1a, E1d, E2a, E3a, E4a, E5a), belonging to the home automation installation (1), and
- a second home automation device (E1b, E1e, E2b, E3b, E4b, E5b), that can be configured or incorporated in the home automation installation (1);
- a step of determination (S20)
- of a first identifier (ID1) of the first home automation device (E1a, E1d, E2a, E3a, E4a, E5a) and/or
- of a second identifier (ID2) of the second home automation device (E1b, E1e, E2b, E3b, E4b, E5b);
- a step of obtaining (S30) a configuration human-machine interface (IHM_CFG), as a function of the first and/or of the second identifier (ID1, ID2), the configuration human-machine interface (IHM_CFG) comprising at least one prompt to execute a confirmation action (CNF) by a user and the configuration human-machine interface (IHM_CFG) being obtained automatically, following the step of detection (S10) of proximity between the first and second home automation devices (E1a, E1d, E2a, E3a, E4a, E5a; E1b, E1e, E2b, E3b, E4b, E5b);
- a step of provision (S40) to the user of the configuration human-machine interface (IHM_CFG);
- a step of analysis (S50) of a result (RES) of the execution by the user of the confirmation action (CNF);
- a step of triggering (S60) of the configuration of the home automation installation (1), conditional on the result (RES);
the method being implemented by the first home automation device (E1a, E1d, E2a, E3a, E4a, E5a) or by the second home automation device (E1b, E1e, E2b, E3b, E4b, E5b) or by a third home automation device (E4c, E5c) in the home automation installation (1), **characterized in that** before the proximity detection step (S10), the user has access only to a command human-machine interface, and **in that** the command and configuration human-machine interfaces (IHM_CFG) are accessible in an exclusive manner, that is to say that when one of the human-machine interfaces is accessible to the user, the other is not.

2. Configuration method according to Claim 1, **characterized in that** the detection step (S10) comprises a substep of detection of an impact (S15, S19) between the first home automation device (E2a, E4a) and the second home automation device (E2b, E4b) .

3. Configuration method according to the preceding claim, **characterized in that** the detection step (S10) further comprises a substep of reception (S16, S18) of at least one message of notification of an impact detected by the first home automation device (E4a) and/or by the second home automation device (E2b, E4b).

4. Configuration method according to Claim 1, **characterized in that** the detection step (S10) comprises a first substep of reception (S11) of a first message (MSG1) originating from an initiating device (EQ_init) out of the first home automation device (E1a, E5a) and the second home automation device (E2b), the first message (MSG1) being received with a reception level (RSSI1) above a first predetermined value.

5. Configuration method according to the preceding claim, **characterized in that** the detection step (S10) further comprises:
- a first substep of transmission (S12) of a second message (MSG2) to the initiating device (EQ_init), the second message (MSG2) being transmitted with a first transmission level (L_Tx1) ;
- a second substep of reception (S13) of a third message (MSG3) originating from the initiating device (EQ_init), the third message (MSG3) comprising a piece of information relating to a second level of reception (RSSI2) of the second message (MSG2) by the initiating device (EQ_init) ;
- a substep (S14) of analysis of the piece information relating to the second reception level (RSSI2).

6. Configuration method according to the preceding claim, **characterized in that** the triggering step (S60) comprises a second substep of transmission (S62) of a fourth message (MSG4) to the initiating device (EQ_init), the fourth message (MSG4) being transmitted with a second transmission level (L_Tx2), lower than the first transmission level (L_Tx1).

7. Configuration method according to one of the preceding claims, **characterized in that** the triggering step (S60) comprises a step of first reaction of the first and/or of the second home automation device if the first and second home automation devices are paired and a step of second reaction of the first and/or of the second home automation device if the first and second home automation devices are not paired.

8. Configuration method according to one of the preceding claims, **characterized in that** the triggering step (S60) comprises a step of transfer of configuration data from the first home automation device of configuration tool type to the second home automation device, the configuration data relating to a third home automation device previously configured and of a type like or similar to the second automation device.

9. Configuration method according to the one of the preceding claims, **characterized in that** the obtaining step (S30) comprises a substep of reception (S33) of at least one message originating from the first or from the second home automation device (E1a, E2b, E3a), this message comprising information defining the configuration human-machine interface (IHM_CFG).

10. Configuration method according to one of Claims 1 to 8, **characterized in that** the obtaining step (S30) comprises a substep of downloading (S35), from a server, of information defining the configuration human-machine interface (IHM_CFG).

11. Configuration method according to one of the preceding claims, **characterized in that** the provision step (S40) comprises:
- a substep of sending (S41), to a so-called recipient home automation device (E1e) having display elements and input elements, of at least one message comprising information defining the configuration human-machine interface (IHM_CFG); and
- a substep of reception (S44) of a message transmitted by the so-called recipient device comprising the result of the execution by the user of the confirmation action (CNF).

12. Home automation device (E) comprising hardware elements (E10, E11, E12, E13, E14, E15, E16, E20) and/or software elements for implementing steps or the steps of the configuration method according to one of Claims 1 to 11.

13. Home automation device according to the preceding claim, **characterized in that** the hardware and/or software elements comprise:
- an element (E11) for detecting proximity between a first home automation device and a second home automation device;
- an element (E12) for determining a first identifier of a first home automation device;
- an element (E13) for obtaining a configuration human-machine interface;
- an element (E14) for providing the configuration human-machine interface;
- an element (E15) for analysing a result of an execution by a user of a confirmation action;
- an element (E16) for triggering the configuration of home automation installation, the configuration being conditional on the result;
- a display screen (E17), notably a touch screen.

14. Home automation installation comprising at least one home automation device according to Claim 12 or according to Claim 13.
